(19) Europäisches Patentamt

European Patent Office

Office européen des brevets

(11) **EP 0 897 626 B1**

(12) **EUROPÄISCHE PATENTSCHRIFT**

(45) Veröffentlichungstag und Bekanntmachung des Hinweises auf die Patenterteilung:
**11.02.2004 Patentblatt 2004/07**

(21) Anmeldenummer: **97922972.1**

(22) Anmeldetag: **07.05.1997**

(51) Int Cl.7: **H04L 12/40**

(86) Internationale Anmeldenummer:
**PCT/EP1997/002296**

(87) Internationale Veröffentlichungsnummer:
**WO 1997/042733 (13.11.1997 Gazette 1997/49)**

(54) **PROTOKOLL FÜR SICHERHEITSKRITISCHE ANWENDUNGEN**

PROTOCOL FOR CRITICAL SECURITY APPLICATIONS

PROTOCOLE DESTINE A DES APPLICATIONS CRITIQUES POUR LA SECURITE

(84) Benannte Vertragsstaaten:
**DE FR GB IT**

(30) Priorität: **07.05.1996 DE 19620137**

(43) Veröffentlichungstag der Anmeldung:
**24.02.1999 Patentblatt 1999/08**

(73) Patentinhaber: **DaimlerChrysler AG**
**70567 Stuttgart (DE)**

(72) Erfinder: **BOHNE, Jürgen**
**D-10555 Berlin (DE)**

(74) Vertreter: **Berghold, Klaus et al**
**DaimlerChrysler AG**
**Intellectual Property Management**
**IPM-C106**
**70546 Stuttgart (DE)**

(56) Entgegenhaltungen:
**EP-A- 0 280 231**       **US-A- 4 161 786**

- **TWENTY-THIRD ANNUAL ALLERTON CONFERENCE ON COMMUNICATION,CONTROL AND COMPUTING, 2. - 4.Oktober 1985, MONTICELLO,ILLINOIS, Seiten 543-544, XP002041360 S.S.LEE ET AL.: "The Effect of Acknowledgements on the Performance of Distributed Spread Spectrum Packet Radio Network "**
- **ICC '86 : " INTEGRATING THE WORLD THROUGH COMMUNICATIONS", 22. - 25.Juni 1986, TORONTO, Seiten 1833-1838, XP002041217 S.L. SU ET AL: "Performance comparison of accknowledgement protocols for multihop code division multiple access networks"**
- **MAPPING NEW APPLICATIONS ONTO NEW TECHNOLOGIES, ZURICH, MAR. 8 - 10, 1988, Nr. -, 8.März 1988, PLATTNER B;GUNZBURGER P, Seiten 179-184, XP000215997 CASTERMANS H L H M: "AN IMPROVED CSMA/CD PROTOCOL FOR THE PACKET-SWITCHED CHANNEL OF THE INTEGRATED SERVICES TERMINAL BUS"**

**Beschreibung**

Kommunikationssysteme arbeiten oft in einer Umgebung, deren Störpotential nicht genau definiert werden kann. Dies gilt vor allem für *Avionik*- und *Automotive*-Anwendungen, deren Störumgebung sich ständig ändert. Die heutzutage verwendeten, nicht-sicherheitskritischen Kommunikationssysteme [1] erfüllen bereits folgende Zuverlässigkeitsanforderungen:

- Kommunikationsfehler müssen entdeckbar sein.
- Der Ausfall eines Teilnehmers darf das Kommunikationssystem nicht lahmlegen.
- Die Reihenfolge der Nachrichten eines Senders bleibt beim Empfang erhalten.
- Nachrichten werden mit hoher Wahrscheinlichkeit rechtzeitig übertragen.

Zur Zeit werden in Kraftfahrzeugen Komponenten eingesetzt, die sicherheitskritische Einzelaufgaben bewältigen und auch mit anderen Komponenten kommunizieren. Die Kommunikation ist hierbei nicht sicherheitskritisch. Gegenstand der Forschung sind demgegenüber Komponenten, die gemeinsam komplexe, sicherheitskritische Aufgaben unter harten Echtzeitbedingungen erfüllen, so daß das Kommunikationssystem selbst sicherheitskritisch ist. Solche Anwendungen stellen erweiterte Anforderungen an ein Kommunikationssystem, die von den derzeitigen Systemen nur teilweise erfüllt werden:

- Das Kommunikationssystem muß *fail-operational* sein, d.h. es muß bei jeder möglichen Störung und nach jedem möglichen Ausfall seine Aufgabe weiter erfüllen. D.h. es müssen redundante Kommunikationswege unterstützt werden.
- Das Kommunikationssystem muß permanente Fehler von Störeinstreuungen zuverlässig unterscheiden und defekte Komponenten - und nur solche - ausschließen.
- Änderungen im Kommunikationssystem (Ausfall und Wiederanlauf) müssen der Anwendung schnellst möglich und netzweit konsistent gemeldet werden.
- In den Nachrichten müssen Verfälschungen bis hin zur maximal vorkommenden Dauer einer Störung zuverlässig erkannt werden.
- Wichtige Nachrichten sind in garantierter Zeit zu übertragen.
- Multicast-Nachrichten sind erforderlich und müssen atomar übertragen werden. Für bestimmte Nachrichten von verschiedenen Quellen ist die Erhaltung ihrer globalen Reihenfolge zu garantieren.
- Es muß ein Sicherheitsnachweis führbar sein, worin ausgeschlossen wird, daß das Kommunikationssystem Sicherheitsfunktionen in den einzelnen Komponenten beeinträchtigen kann. Wenn Komponenten gemeinsam eine sicherheitskritische Aufgabe bearbeiten, muß ein Sicherheitsnachweis für das Kommunikationssystem unter Einschluß aller Komponenten geführt werden.

Neben den Zuverlässigkeits- und Sicherheitsanforderungen stellt die Praxis weitere Anforderungen an ein Kommunikationssystem:

- Von großer Wichtigkeit ist die leichte Integrierbarkeit von Stationen und Funktionen in ein und zu einem Gesamtsystem. Die einzelnen Stationen müssen dabei leicht konfigurierbar sein.
- Dynamisches Aus- und Eingliedern von Kommunikationsteilnehmern und Erweiterbarkeit des Netzes sind ebenfalls wichtige Eigenschaften.
- Ein zukunftsorientiertes Kommunikationssystem muß mit der Entwicklung Schritt halten und weiterentwickelt werden können. Es sollte für höhere Übertragungsgeschwindigkeiten geeignet und auf verschiedenen physikalischen Medien lauffähig sein. Denkbare Anwendungsarchitekturen, insbesondere für den redundanten Betrieb, dürfen nicht behindert oder gar verhindert werden.
- Und: Das Kommunikationssystem muß kostengünstig sein.

"Motor" eines Kommunikationssystems ist sein Protokoll. Protokolle lassen sich bezüglich ihres Zugriffsverfahrens grob in zwei Klassen unterteilen: synchron und asynchron.
Asynchrone Zugriffsverfahren haben im Mittel eine kurze Zugriffszeit, die jedoch nicht (bzw. nur für eine bestimmte Nachricht) garantiert werden kann. Die bekanntesten, für den Kfz-Bereich entwickelten Protokolle mit asynchroner Arbitration sind CAN [2] und ABUS [3].
Synchrone Zugriffsverfahren können den Zugriff besser sicherstellen. Sie arbeiten nach drei verschiedenen Grundprinzipien: Master/Slave, Token Access und Time Division Multiple Access (TDMA):

- Einfache Master/Slave-Protokolle, wie das für den Militärflugzeug- und Militärfahrzeug-Bereich konzipierte MIL-Standard-Protokoll 1553B [12], sind auf die Funktionsfähigkeit ihres Masters angewiesen und brechen im Fall seines Fehlers zusammen. Bei anderen Multi-Master-Protokollen kann die Master-Eigenschaft auch im Fehlerfall auf andere Stationen im Netz übergehen, jedoch ist dabei der Nachrichtenfluß unterbrochen und nicht deterministisch.

- Protokolle nach dem Token-Prinzip, wie z.B. das Token-Bus-Protokoll [9] und seine Varianten sind im Fehlerfall ebenfalls nicht strikt deterministisch (Zeitprobleme beim Erkennen von Token-Verlust und Abstimmung bei der Neugenerierung) oder sie stellen, wie das Token-Ring-Protokoll [10], die schwer zu erfüllende und teure Forderung nach einer aktiven Kommunikationsstrecke.
- TDMA-basierte Protokolle können so aufgebaut werden, das sie auch im Fehlerfall deterministisch arbeiten.

Genormte Protokolle sind oft Kombinationen aus den o.g. Grundprinzipien.

So finden sich z.B. im Bahnbereich die TCN-Protokolle [4] MVB und WBT. Sie beinhalten eine wechselnde zentrale Master-Kontrolle, funktionieren jedoch ansonsten nach dem TDMA-Prinzip. Ein nicht-deterministisches TDMA-Protokoll, bei dem den Teilnehmern im Betrieb Zeitscheiben dynamisch zugewiesen werden, ist das Protokoll gemäß Patent US-A-4 161 786 [14]. Das für die Luftfahrt konzipierte Protokoll ARINC 629 (MTDB) [13] ist ein durch lokale Uhren kontrolliertes TDMA-Protokoll, das jedoch zur Kollisionsvermeidung den Bus beobachtet und nur dann deterministisch arbeitet, wenn alle Teilnehmer ihre Zeitgrenze beachten. Das Protokoll ARINC659 (SAFEbus) [7] sieht eine strikte TDMA-Arbitration vor. Es wurde ebenfalls für sichere Systeme in der Luftfahrt konzipiert, verlangt jedoch eine aufwendige und teuere physikalische Realisierung, und ist als Backplane-Bus (42Inches) zu kurz für räumlich verteilte Anwendungen.

Dieser Bericht stellt ein Protokoll vor, dem ein Ansatz auf Basis einer reinen, verteilten und strikt deterministischen TDMA-Arbitration zugrunde liegt. Das Protokoll berücksichtigt die vorgenannten Anforderungen, ist äußerst robust gegen kurze, lang anhaltende und auch periodische Störungen und ergreift alle vertretbaren Möglichkeiten, um die Kommunikation aufrecht zu erhalten. Es setzt eine synchrone verteilte Zeitbasis voraus, die über die laufenden Nachrichten [5] und durch lokale Uhren [6] realisiert werden kann. Das Protokoll präjudiziert keine bestimmte Software-Architektur für die Anwendung. Es ist offen für Kombinationen aus redundanten, sicherheitskritischen Stationen bis hin zu nicht-kritischen einfachen Stationen, mit geringen bis hin zu harten Echtzeitanforderungen. Neben dem Leitmotiv Fehlertoleranz und Sicherheit wurden bei der Entwicklung des Protokolls Aspekte wie Praktikabilität, Kosten und Weiterentwicklung in hohem Maße berücksichtigt.

Für sicherheitskritische Systeme ist das statische (Pre-Runtime) Scheduling von Anwendungsprozessen wegen der leichteren Verifizierbarkeit von Vorteil. Ein naheliegender Gedanke besteht in der Synchronisation von Protokoll und Anwendung, wodurch eine zeitgesteuerte Architektur entsteht. In einer solchen Time Triggered Architecture (TTA) steuert ein globaler Zeittakt, der verteilt realisiert sein kann, alle Systemaktivitäten: Anwenderfunktionen und Kommunikation. Der Informationsfluß in einer solchen Architektur kann wie folgt ablaufen: Eine Nachricht wird in einer vorbestimmten Zeitscheibe produziert, in der nachfolgenden Zeitscheibe gesendet und empfangen und während der nächsten Zeitscheibe in der Empfängerstation weiterverarbeitet (Delivery-Delay minimal, Delivery-Jitter=0). Das vorliegende Protokoll und das Time Triggered Protocol TTP [8], das ebenfalls für Anwendungen im Kfz vorgesehen ist, kann Teil einer solchen durchgängig zeitgesteuerten Architektur sein.

Durchgängig zeitgesteuerte Architekturen und ihre statischen Aktivitätszuteilungen besitzen große Vorteile, besonders hinsichtlich der Vereinfachung des Sicherheitsnachweises und der Synchronisation redundanter Stationen. Sie weisen jedoch auch ein paar Probleme auf:

- Wenn z.B. beim Transport Nachrichten gestört werden oder verloren gehen, bleibt für eine erneute Übertragung keine Zeit. Das TTP-Protokoll sieht in solchen Fällen die Ausgliederung betroffener Stationen vor.
- Da jede Komponente in ihrem Zeitverhalten auf das Gesamtsystem abgestimmt sein muß, werden Kosten und Aufwand zum Problem, wenn eine zeitgesteuerte Architektur auf ein variantenreiches System bzw. Produkt angewandt wird und nicht auf ein Spezialprodukt. Es wird sowohl für unterschiedliche Fahrzeugtypen als auch für verschiedene Ausstattungsvarianten verschiedene Konfigurationen der gleichen Komponente geben. Das macht ein Konfigurationsmanagement beim Bau eines Kfz und beim nachträglichen Einbau und Austausch von Komponenten erforderlich.
- In der Luft- und Raumfahrt werden zeitgesteuerte Systeme eingesetzt, die beim Wechsel von Flugphasen sogenannte *Mode Changes* durchführen. Verschiedene Modi, also unterschiedliche Vergabe von Senderechten, sind in zeitgesteuerten Systemen notwendig, wenn ein System an eine veränderte Situation angepaßt werden muß. *Mode Changes* sind deshalb beim vorgestellten Protokoll vorgesehen. Die Durchführung eines *Mode Change* bereitet jedoch im Störungsfall unter Konsistenz- und Realzeitgesichtspunkten große Probleme, auch wenn die Modi starken Beschränkungen unterworfen werden und nicht beliebige Modi gestattet sind. Sie können deshalb nur im störungsfreien Fall durchgeführt werden. Zudem muß jeder Modus von jeder Komponente, auch wenn sie selbst keine unterschiedlichen Modi benötigt, mitgetragen werden. Das bedeutet, jede Komponente muß prinzipiell

EP 0 897 626 B1

in jedem Modus ihre Aufgabe erfüllen. Die internen zeitlichen Abläufe müssen mit den Modi konform gehen.

*Fazit*. Das Protokoll sollte keine generelle Synchronisation mit der Anwendung erzwingen, sollte sie jedoch ermöglichen, so daß Teile der Anwendung gleichzeitig zeitgesteuert, zeitgesteuert-protokollsynchron und ereignisgesteuert arbeiten können. Eine zeitgesteuerte, auch protokollsynchrone Software-Architektur kann für ein sicheres und hochverfügbares Kfz-Grundsystem, das z.B. aus einer redundanten Fahrerstation und vier Radmodulstationen besteht, sinnvoll sein. Alle anderen Teile können ereignisgesteuert arbeiten. Mode Changes, also Sprünge in unterschiedliche Zeitscheibenvergaben während des Betriebs, sollten nicht zum normalen Ablauf gehören.

Der Erfindung liegt insbesondere die Aufgabe zugrunde, ein Protokoll zur Übertragung von Nachrichten zwischen sendenden und empfangenden Stationen für sicherheitskritische Anwendungen auf Basis einer globalen Zeitscheibenvergabe anzugeben, durch das Störungen im Kommunikationssystem zuverlässig und konsistent erkannt, gestörte Kommunikationsteilnehmer zuverlässig und konsistent ermittelt und ausgegliedert werden. Diese Aufgabe wird gemäß der Erfindung durch die im Patentanspruch gekennzeichneten Merkmale gelöst.

Das Protokoll arbeitet funktional unabhängig von der Anwendung und kann von letzterer in seinem Ablauf nicht beeinflußt werden. Es stellt jeder Station ein gewisses Maß an Übertragungskapazität pro Zeiteinheit zur Verfügung. Solange die dort lokalisierte Anwendung innerhalb dieser Grenzen Transferleistungen anfordert, kann eine maximale Übertragungszeit unter gegebenen Störbedingungen garantiert werden. Eine spezielle Konfiguration des Protokolls ist wegen der Unabhängigkeit von der Anwendung nicht notwendig. Die Koordination der verschiedenen Zulieferer von Stationsmodulen bezüglich des Protokolls beschränkt sich auf die Verwendung einer abgestimmten, eindeutigen Stationsadresse und der Zugriffsinformation.

Das Protokoll basiert auf dem TDMA-Zugriffsverfahren (Time Division Multiple Access). Beim TDMA-Verfahren wird die Zeit in Zeitscheiben unterteilt, die in allen Stationen weitgehend synchron gehalten werden. Jeder Station ist in einem TDMA-Zyklus mindestens eine eigene Zeitscheibe statisch zugeordnet. Innerhalb ihrer Zeitscheibe hält die Station das ausschließliche Senderecht auf dem gemeinsamen Kommunikationsmedium. Dieses Verfahren ist effizient, wenn, wie in unserem Fall, die Anzahl der Kommunikationsteilnehmer und die Nachrichtenlängen eher gering sind. Beide Parameter sind, neben der Übertragungsrate der Hardware, die wirtschaftlich vertretbar sein muß, die bestimmenden Faktoren für die Zugriffszeit.

Ein großer Vorteil von TDMA ist der deterministische Zugriff. Eine totale Blockade des Kommunikationssystems ist prinzipbedingt ausgeschlossen. Im fehlerfreien Fall kann jeder Station eine maximale Zeitdauer für die Übertragung ihrer Nachrichten garantiert werden, wenn sie die ihr zugestandene Kapazitätsgrenze beachtet. Um auch bei Störungen und Ausfällen eine Maximalzeitdauer beim Nachrichtentransport zu gewährleisten, muß das einfache TDMA-Verfahren zum Protokoll erweitert werden.

Je höher die Übertragungsgeschwindigkeit auf einer Kommunikationsleitung ist, desto eher werden Störungen wirksam. Die möglichen Störungen, denen ein Kfz ausgesetzt ist und die die Einrichtungen im Kfz selbst produzieren, müssen entweder konstruktiv oder vom Protokoll beherrscht werden. Da sind zunächst stochastische, auch burst-artige Störungen, die von außen eingestreut werden, oder die von internen Schaltvorgängen stammen. Zum anderen gibt es auch interne oder vom Nachbarn kommende periodische Störungen, die sich auf den Ablauf eines periodischen Protokolls besonders ungünstig auswirken können. Dies sind beispielsweise Störungen durch Zündung und Generator, deren Periode sich außerdem in Abhängigkeit von der Drehzahl ändert. Wenn solche Störungen auch nur zeitweilig durchschlagen - und dies kann z.B. auch durch Produktionsfehler, Alterungsfehler oder durch Wartungsfehler an den Entstörbauteilen geschehen - kann eine bestimmte Drehzahl auf ein streng periodisches TDMA-Protokoll eine fatale Wirkung haben.

Es gelten folgende Randbedingungen:

- Topologie des Kommunikationssystems:
  Es wird ein bitserieller Bus verwendet, dessen maximale Länge in etwa 100m beträgt und der redundant vorhanden sein kann. An die Busleitung - z.B. (abgeschirmte) Zweidrahtleitung - sind die Teilnehmerstationen mittels Transceiver so angeschlossen, daß eine Blockade des Nachrichtenverkehrs durch einen permanenten Hardware-Fehler einer einzelnen Station ausgeschlossen ist.
- Anforderungen an die Kommunikationsteilnehmer:
  Die Teilnehmerstationen besitzen eine Fehlervermeidungseinrichtung, die sicherstellt, daß ein Sendeversuch außerhalb der stations-eigenen Zeitintervalle abgefangen wird.
  Stationen sind weiterhin in der Lage, spezielle Signale (VETO) zu erzeugen, die auch unter starken Störeinflüssen mit sehr hoher Wahrscheinlichkeit erkannt werden. Da VETO-Signale außer ihrer Anwesenheit keine weitere Information übermitteln, können sie als dominante Signalpegel oder auch als rückgekoppelte Wechselsignale realisiert sein. Die Signale sollen jedoch eine so spezielle Ausprägung besitzen, daß es nur selten vorkommt, daß eine Störung vom Empfänger als VETO-Signal interpretiert wird.
- Länge der Nachrichten, Nachrichten pro Zeiteinheit:

Die benötigte Nachrichtenlänge der Anwendungen liegt voraussichtlich zwischen einigen Bytes und einigen zehn Bytes. Sollen auch zukünftige datenintensive Anwendungen, z.B. Streckenführung, über dieses Kommunikationssystem betrieben werden, wäre der Einsatz einer Hochgeschwindigkeits-Hardware unumgänglich.

- Anzahl der Kommunikationsteilnehmer:
  Anwendungen im Fahrzeug benötigen je nach Aufgabe

  - extrem häufigen periodischen Buszugnff, z.B. Steuerungssubsystem,
  - häufigen periodischen Buszugriff, z.B. Bremssubsystem,
  - oder weniger häufigen (periodischen) Zugriff mit geringeren Zeitanforderungen.

  Die erforderlichen Zugriffszeiten der Teilnehmer sind also unterschiedlich und liegen im härtesten Fall voraussichtlich bei ca. 1 ms. Die maximale Anzahl der Stationen, die mehr oder minder harte Realzeit-Transportbedingungen fordern, ist bei den vorgenannten Nutzdatenmengen und den heute gebräuchlichen Übertragungsgeschwindigkeiten (1 bis 10MBit/s) auf etwa 32 begrenzt. Daneben arbeiten weitere Stationen im gleichen Netz, die geringere Realzeitgarantien benötigen.

- Qualität des Nachrichtentransports (Transportdauer, Verlust, Verdopplung, Reihenfolge):
  Die Transportdauer einer Nachricht wird garantiert. Bei Verlust einer Nachricht wird die Anwendung unmittelbar und sofort benachrichtigt. Verdopplung und Reihenfolgevertauschung von Nachrichten sind ausgeschlossen.

- Verbindungsart (synchron, asynchron), Kommunikationsbeziehungen (1 zu 1, 1 zu n):
  Nachrichten werden aus Gründen der Systemkonsistenz (alle Stationen empfangen eine Kommando- oder Zustandsnachricht gleichzeitig) und der Systemerweiterbarkeit *broadcast* gesendet, was eine verbindungsorientierte Arbeitsweise ausschließt.
  Der Protokoll-Controller arbeitet unabhängig von der Anwendung, d.h. Anwendernachrichten werden entweder wartend synchron oder nicht-wartend asynchron über Warteschlangen oder zu vorgeplanten Zeitpunkten versendet. Liegt keine Nachricht vor, handelt der Protokoll-Controller nach eigenen Notwendigkeiten.

- Art und Häufigkeit von Störungen aus der Umgebung:
  Das Protokoll soll in stark gestörten Umgebungen mit häufigen, auch periodisch auftretenden Übertragungsfehlern, die mitunter burst-artig andauern können, zuverlässig arbeiten. Daher werden permanente Fehler der Kommunikations-Hardware erkannt und der betroffene Teilnehmer ausgegliedert. Transiente Störungen führen nicht zur Ausgliederung einer Station. Eine Station kann sich in das laufende Protokoll wieder eingliedern.

- Zulässige Störungen durch das Kommunikationssystem in die Umgebung:
  Bei Verwendung gekapselter Stationen und abgeschirmter Busleitungen können Störungen durch die Kommunikation in die Umgebung, sowie Störungen aus der Umgebung, stark reduziert werden. Das Protokoll ergreift hierzu keine Maßnahmen.

Die Erfindung wird im folgenden zunächst in einer Kurzeinführung in das Protokoll anhand eines Beispiels beschrieben. Eine detaillierte Beschreibung, Protokollzustände und Regeln, sind in den anschließenden Kapiteln dargelegt.

Das TDMA-Arbitrationsverfahren wird unter der Philosophie *Silence is Consent* zum Kommunikationsprotokoll erweitert. Dazu werden die Zeitscheiben jeder Station in zwei Zeitintervalle, ein Transferfenster und ein kurzes nachfolgendes Quittungsfenster, unterteilt. Wird im Ouittungsfenster "geschwiegen", gilt die vorangegangene Sendung als akzeptiert.

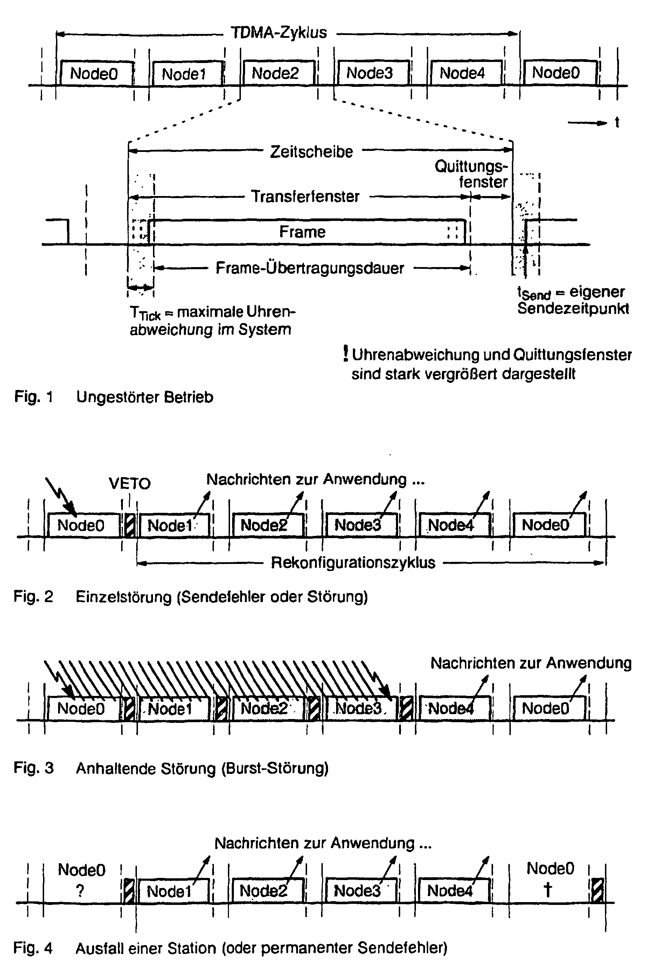

Fig. 1 zeigt die in ein Transferfenster und in ein Quittungsfenster unterteilten Zeitscheiben als Prinzipbild im ungestörten Betrieb.

Bei oberflächlicher Betrachtung wird durch die Einführung des Quittungsfensters, auch wenn es nur wenige Bitübertragungszeiten dauert, Übertragungskapazität verschenkt. Dabei ist jedoch zu bedenken, daß jeder reale Protokoll-Controller nach Empfang einer Sendung eine gewisse Zeit benötigt, um die Nachricht zu überprüfen, an die Anwendung zu übergeben und die eigene, nachfolgende Sendung zu präparieren. Es wird also, auch wenn einige Funktionen parallelisierbar sind, eine Pause zwischen zwei Sendungen geben. Protokollkontrolle, Übergabe und Präparation können bei geschickter Planung des Protokoll-Controllers während des Quittungsfensters durchgeführt werden.

Ein Vorteil des Quittungsfensters ist seine Lage zwischen den Sendefenstern, die es nicht zuläßt, daß Störungen, die kürzer einwirken, als das Quittungsfenster breit ist, zwei aufeinander folgende Sendungen zerstören. Deshalb sollte das Quittungsfenster mindestens so breit sein wie die Dauer der häufiger vorkommenden Störungen.

In Umkehrung bedeutet *Silence is Consent*: Wenn eine Station eine Störung entdeckt, legt sie im Quittungsfenster Einspruch in Form eines VETO-Signals ein. Dieses Signal ist Basis der vollständigen Konsistenz im Gesamtsystem. Im Fall, daß die sendende Station oder eine Station, die eine Sendung korrekt empfangen hat, VETO erkennt - es kann sich in seltenen Fällen auch um eine Störeinstreuung handeln, die als VETO fehlinterpretiert wird - sendet sie ebenfalls auf allen (redundanten) Kommunikationskanälen VETO. Diese Festlegung wird getroffen, um die Wahrscheinlichkeit, daß alle Stationen VETO erkennen, zu erhöhen, sie dient auch der Sicherstellung der Konsistenz im System mit einkanaligen bzw. einkanaligdefekten Stationen. Das Senden von VETO-Signalen wird kurz vor Erreichen der neuen Zeitscheibe eingestellt.

Nach einer Störung wird ein Rekonfigurationszyklus durchlaufen. Er dient der Ermittlung der exakten Fehlerursache und ggf. der Lokalisation und Ausgliederung einer defekten Station. Im Zyklus werden spezielle Nachrichtenrahmen gesendet (im Bild grau unterlegt), die jedoch ebenfalls Anwendernachrichten enthalten. Inkorrekter Empfang im Zyklus wird ebenfalls durch VETO markiert. Handelt es sich um einen Fehler des Senders (Fig.2) oder um eine Störung, die noch während des Zyklus abklingt (Fig.3 und Fig.4), werden die in den Sendungen enthaltenen Anwendernachrichten weitergeleitet.

Zum Abschluß des Rekonfigurationszyklus wird der normale Betrieb wieder aufgenommen. Spätestens nach der erneuten Sendung in der initial gestörten Zeitscheibe (Fig.4: Zeitscheibe des Node 0) würde auch die Ausgliederung einer ausgefallenen Station oder einer Station mit permanentem Fehler im Sende- oder Empfangskanal geschehen. Jede Station führt dazu lokal einen Systemzustandsvektor, in dem sie laufend den aktuellen Zustand der Partnerstationen einträgt. Diese Membership-Information steht auch der Anwendung jederzeit konsistent zur Verfügung.

In einem TDMA-Zyklus besitzt jede Station, die Nachrichten versendet, mindestens eine Zeitscheibe, in der sie sendeberechtigt ist. Da nicht alle Stationen gleichberechtigt behandelt werden sollen, kann - unter Wahrung der vorgenannten Aussage - eine problemangepaßte Zeitscheibenvergabe im TDMA-Zyklus gewählt werden. So können Stationen, die kürzere Zugriffszeiten benötigen bzw. größere Informationsmengen zu übertragen haben, zwei oder mehr Zeitscheiben im TDMA-Zyklus besitzen. Als Beispiel sei eine Zeitscheibenvergabe vorgestellt, die ein Kfz-Grundsystem (0,1 redundante Fahrerstation, 2...5 Radmodule) bevorzugt und Rechenzeit nach der Kommunikation vorsieht, in der andere Stationen (6,7,8,9) senden:

... 3 9 I 0 1 6 2 3 4 5 7 1 0 8 4 5 2 3 9 I 0 1 6 ...

Die Zeitscheibenvergabe muß jedoch global und konsistent im Kommunikationssystem bekannt sein. Sie wird im folgenden als statisch vorgegeben angenommen. Sind sehr lange Burst-Störungen zu erwarten, können mehrere Stationszyklen zu einem Gesamtzyklus zusammengefaßt werden. Damit wird zugleich der Rekonfigurationszyklus vergrößert, in dem eine anhaltende Störung als Einzelstörung behandelt wird. Um zu verhindern, daß periodische Störungen eine bestimmte Station ständig stören und damit zur Ausgliederung zu bringen, ist die Reihenfolge der Stationen in den o.g. Teilzyklen umgeordnet.

Führt man den Gedanken der Anpassung der Kommunikation weiter, kommt man zu dem Wunsch mehrere unterschiedliche TDMA-Zyklen im System zur Verfügung zu haben. Damit gelangt man zum Problem des Zykluswechsels (Mode-Change). Läßt man Zykluswechsel zu, sollte man sich darüber im Klaren sein, daß ein Buswächter (Bus Guardian)-das ist eine vom Protokoll-Controller unabhängige Hardware-Einrichtung, die sicherstellt, daß Sendeversuche außerhalb der stations-eigenen Zeitintervalle abgefangen werden - notwendigerweise komplexer wird.

Die Zyklusinformation wird konsistent vom Anwender zur Verfügung gestellt und liegt dann statisch fest. Zykluswechsel werden auf Anforderung der Applikation einer Station wirksam, wenn der neue Zyklus bei allen anderen aktiven Stationen von ihrer Applikations-Software freigegeben wurde und sie deshalb kein VETO eingelegen. Der neue TDMA-Zyklus beginnt nach Ablauf des aktuellen Zyklus.

Um einen Ausfall des gesamten Kommunikationssystems durch eine Blockade des Kommunikationskanals (Einzelfehler: Kurzschluß, Trennung, Abschlußwiderstand Kontaktfehler) auszuschließen sollte der Protokoll-Controller zwei Kommunikationskanäle besitzten. Im Fall eines permanenten Fehlers eines Kommunikationskanals (Busleitung und/oder Transceiver) kann bei redundanter Auslegung die Kommunikation vollständig aufrecht erhalten werden und das Kfz bleibt fahrfähig. Sind alle Teile in Ordnung, ist die Wahrscheinlichkeit für ein Wirksamwerden einer Störung durch die zweifache Übertragung (geringfügig) herabgesetzt. Dies ist für das Protokoll jedoch von geringerem Einfluß, da auch bei plötzlichen Ausfall eines Kanals der Betrieb bei Störungen unbedingt sichergestellt sein muß. (Wenn möglich sollen Kraftfahrzeuge - u.U. mit geringer Geschwindigkeit - weiterfahren können.) Durch örtliche Trennung der Anschlüsse und alternative Verlegung der Busleitungen kann ein mechanischer oder termischer Common-Mode-Fehler, der beide Kanäle betrifft, weitgehend ausgeschlossen werden.

Festlegung:

a) Eine Station sendet im Normalfall auf beiden Kanälen zeitgleich Nachrichtenrahmen und ggf. VETO-Signale. Die Übertragung einer Nachricht gilt zunächst als erfolgreich, wenn eine Station mindestens eine der redundanten Nachrichten, egal von welcher Leitung, korrekt empfängt. Wird nachfolgend auf einer der beiden Leitungen VETO erkannt -eine andere Station hatte keinen korrekten Empfang - gilt die Übertragung als gescheitert.

b) Der gleichzeitige Betrieb von Stationen, die beide Leitungen eines redundanten Busses betreiben, und solchen, die (ausfallbedingt) nur eine Leitung betreiben, ist zulässig.

Unter Verwendung eines selbsttaktenden Codes bei der physikalischen Übertragung kann das Einfügen von Änderungsbits (Bit-Stuffing) in einer Sendung unterbleiben, wenn ein Endekenner der Sendung unnötig ist. Bei variablen Nachrichtenlängen hat man die Wahl, die Endekennung durch Ruhe auf der Leitung (Interframe-Spacing) sicherzustellen oder am Anfang der Sendung eine Längenangabe mitzusenden, die dann aber die Empfangs-Hardware auswerten muß. Damit ist jedoch, wie beim Bit-Stuffing, der Nutzinformationsanteil verringert. In einem zeitgesteuerten Protokoll kann auch die Tatsache genutzt werden, daß die Länge und der Sendezeitpunkt aller Nachrichten zur "Compile-Zeit" des Gesamtsystems bekannt ist.

Bei variabler Nachrichtenlänge hat man in jedem Fall den Nachteil, daß sowohl der Protokoll-Controller als auch der bereits erwähnte Buswächter komplexer werden. Die einfachste Methode besteht darin, Nachrichten konstanter Länge zu senden, wodurch auch alle Zeitscheiben die gleiche Länge aufweisen.

Die Nachrichtenrahmen - im folgenden Frames genannt - bestehen aus folgenden Feldern:

Preamble/Startdelimiter: Dient zur Synchronisation der Empfänger.

F    Frame-Type: Normal-Frame, Recovery-Frame

E    Error-Bit im Recovery-Frame: gesetzt, wenn ein Übertragungsfehler aufgetreten ist.

N    No-Frame im Recovery-Frame: gesetzt, wenn kein Frame empfangen wurde.

C    Cycle-Number im Normal-Frame: Alle aktiven Stationen übermitteln über das Cycle-Bit in den Normal-Frames aufeinander folgender Zeitscheiben die Nummer des aktuellen TDMA-Zyklus (Mode). Eine Sequenz besteht aus einer Reihe von Normal-Frames mit gesetztem Cycle-Bit, die von Normal-Frames mit gelöschtem Cycle-Bit begrenzt werden. Die Summe der Frames mit gesetztem Cycle-Bit ergibt die Nummer des Zyklus. Beispiel:

$$\text{Cycle-Bit(N-Frame}_{slice})_{slice=n,\ n+1,\ n+2\ ...}: \{...010...\} \mathrel{\widehat{=}} \text{Cycle 1}$$

Die Kenntnis der aktuellen Zyklusnummer ist notwendig, wenn sich eine neu anlaufende Station in den laufenden Protokollbetrieb integrieren will. Eine Störung macht die Übermittlung ungültig.

S    Slice-Number im Normal-Frame: Eine Stationen übermittelt über das Slice-Bit in ihren Normal-Frames ständig die Nummer der Zeitscheibe, in der sie gerade sendet, und damit implizit - unter Kenntnis der aktuellen Zyklusnummer - auch ihre eigene Stationsadresse. Eine Sequenz besteht aus einer Reihe von Normal-Frames mit gesetztem Slice-Bit, die von Normal-Frames mit gelöschtem Slice-Bit begrenzt werden. Die Summe der Frames mit gesetztem Slice-Bit ergibt die Nummer der Zeitscheibe. Beispiel:

$$\text{Slice-Bit(N-Frame}_{slice,cycle})_{slice=const\ /\ cycle=i,\ i+1,\ i+2\ ...}: \{...0110...\} \mathrel{\widehat{=}} \text{Slice 2}$$

Die Kenntnis der Zeitscheibennummer ist notwendig, wenn sich eine neu anlaufende Station in den laufenden Protokollbetrieb integrieren will und ihre eigene Zeitscheibe bestimmen muß. Eine Störung macht die Übermittlung ungültig.

G    Group-Station (ignore Cycle/Slice-Bits): gesetzt von Stationen die sich eine Zeitscheibe teilen, bzw gesetzt bis zum Ende des aktuellen Zyklus nach Aufforderung zum Zykluswechsel.

M    Message-Type: Applikationsnachricht oder Protokoll-Nachricht (NULL, INIT, RUN, CHANGECYCLE, INTEGRATE). Protokollnachrichten werden während der Initialisierung, der Eingliederung und im Betrieb gesendet (NULL, wenn keine Anwendernachricht vorliegt).

I    Input-Error: gesetzt, wenn einer der Kommunikationskanäle der sendenden Station permanent defekt oder gestört ist.

x,y    frei (u.U. Parity über Protokoll-Byte)

Message:

Dieses Feld enthält die Anwendernachrichten, die unterschiedlich lang sein können. Da in einer zeitgesteuerten Architektur Absender und Nachrichtentyp mit der Zeitscheibe eindeutig festgelegt sind, kann die Anwendung auf eine Typkennung in der Nachricht verzichten. Bei Protokollnachrichten sind in diesem Feld der Typ, die Nummer des aktuellen Zyklus, die aktuelle Zeitscheibe im Zyklus, der stations-geführte Zustandsvektor des Kommunikationssystems und eine Prüfsumme über die Zyklusinformation eingeschrieben.

CRC:

Der Cyclic Redundancy Check überdeckt das Protokoll-Byte und das Nachrichtenfeld. Er wird beim Senden generiert und angefügt und beim Empfang generiert und verglichen. Um eine zuverlässige Fehlererkennung zu gewährleisten, sollte der CRC mindestens eine Bit-Länge aufweisen, die der Länge der in der Praxis (häufiger) vorkommenden Störungen entspricht.

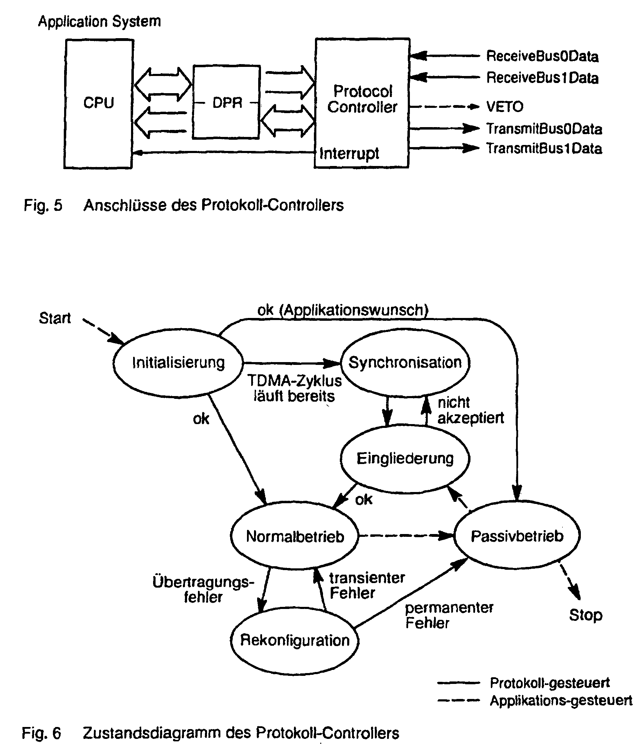

Das Anschlußschema des Protokoll-Controllers ist im Prinzip in Fig.5 dargestellt.

Der Nachrichten-, Kommando- und Informationsaustausch von Anwender-CPU und Protokoll-Controller kann z.B. über einen *Dual Port RAM* (DPR) erfolgen, der dann in 2 Teile aufzuteilen ist. Im ersten Teil ist nur die Anwender-CPU, im zweiten nur der Protokoll-Controller schreibberechtigt. Die Anwendung kann daher nicht in den Protokollablauf eingreifen.

Der Protokoll-Controller besitzt auf der Netzwerkseite jeweils zwei serielle Eingänge und Ausgänge zum direkten Anschluß zweier Transceiver. Der Protokoll-Controller hat keine Kenntnis, ob tatsächlich redundante Busleitungen angeschlossen sind, arbeitet jedoch nach Voreinstellung in diesem Sinne. Ist nur ein Transceiver und Bus angeschlossen oder ein Kanal defekt, ändert das am Protokollablauf nichts, lediglich die Wahrscheinlichkeit, daß eine Störung wirksam wird, vergrößert sich. Ob eine Veto-Leitung notwendig ist oder VETO als spezielles Signal auf der Transmit-Leitung gegeben wird, hängt von der Realisierung des Veto-Signales ab. Aus Gründen der Fehleroffenbarung sollte VETO besser über die Transmit-Leitung abgewickelt werden, da die Funktionsfähigkeit der Veto-Einrichtungen im Betrieb nicht getestet werden können. Die Leitung geht - wenn vorhanden - an beide Transceiver.

Der Protokoll-Controller arbeitet nach dem in Fig.6 gezeigten Zustandsdiagramm.

Nach Einschalten und auf Anforderung der Anwender-Software geht der Protokoll-Controller in die *Initialisierung*. In der *Initialisierung* werden andere Kommunikationsteilnehmer angesprochen und ein TDMA-Zyklus aufgebaut. Im Anschluß wechselt der Protokoll-Controller in den *Normalbetrieb* oder, wenn von der Applikation gewünscht, in den *Passivbetrieb*. Der *Passivbetrieb* gestattet der Anwendung ein Mithören der Nachrichten; der Protokoll-Controller ist jedoch nicht sendeberechtigt. Wenn bereits ein Zyklus von anderen Stationen aufgebaut wurde, wechselt der Protokoll-Controller von der *Initialisierung* über den Zustand *Synchronisation* und *Eingliederung* in den *Normalbetrieb*. Auch aus dem *Passivbetrieb* heraus kann auf Veranlassung der Anwendung über die *Eingliederung* der Wechsel in den *Normalbetrieb* erfolgen. Ein Übertragungsfehler versetzt den Protokoll-Controller aus dem *Normalbetrieb* in den Zustand *Rekonfiguration*. Es wird ein Rekonfigurationszyklus durchlaufen, in dem festgestellt wird, ob ein permanenter Fehler vorliegt. Der Protokoll-Controller wechselt, wenn er von einem solchen Fehler betroffen ist, in den *Passivbetrieb*. Nach Fehlerstatistik und erfolgreichem Selbsttest kann eine erneute *Eingliederung* versucht werden, oder er kann abschaltet werden.

Die nachfolgende verbale Spezifikation enthält Erklärungen und Regeln für die Implementierung des Protokoll-Controllers. Die Regeln werden teilweise durch Zeitdiagramme ergänzt, die das resultierende Verhalten des Kommunikationsgesamtsystems bezüglich der Regeln versinnbildlichen. Der Begriff "Station" wird synonym für "Protokoll-Controller" verwandt.

Im folgenden sind Grundregeln aufgeführt, die generell gelten:

Regel 1
Jede Stationen erhält eine sie eindeutig kennzeichnende numerische Adresse «i» und Zyklusinformation, die mit allen Stationen konsistent ist. Die Zyklusinformation umfaßt mindestens einen TDMA-Zyklus, enthält in der Regel jedoch mehrere Zyklen. Ein Zyklus besteht aus einer Reihe von Zeitscheiben, die bestimmten Stationen «i» zugeordnet sind. In einem Zyklus können mehrere Zeitscheiben einer Station «i» zugeordnet sein. Eine Station «i» im aktuellen Zyklus «c» besitzt in allen Zeitscheiben der Nummer «s» mit owner(c,s)=i das Senderecht; im Fall owner(c,s) $\neq$ i darf sie nicht senden.

Regel 2
Die Stationen besitzen mindestens zwei Kommunikationskanäle (Transceiver), die mit separaten Busleitungen verbunden sind, sodaß das Gesamtsystem bei Ausfall eines Busses weiterarbeiten kann (fail-operational bleibt).

Regel 3

Ein Übertragungsfehler liegt vor, wenn in einer Zeitscheibe von einem Empfänger <u>kein</u> Frame empfangen wurde oder <u>kein</u> Frame korrekt empfangen wurde (framing error, transfer code error, crc error). Bei Empfang <u>eines</u> korrekten Frames gilt die Übertragung als erfolgreich.

Stationen, die einen Übertragungsfehler erkannt haben, senden im nachfolgenden Quittungsfenster grundsätzlich VETO. Eine Station selektiert beim Senden von VETO grundsätzlich beide Kanäle. Dadurch wird bei redundantem Anschluß auf beiden Leitungen VETO gesendet.

Regel 4

Eine Station, die im Quittungsfenster VETO erkennt (egal auf welchem Kanal), sendet ebenfalls bis zum Ende des Quittungsfensters auf beiden Kanälen VETO (auch wenn sie ein korrektes Frame empfangen hat). Dadurch wird die Konsistenz mit einkanaligen und einkanalig defekten Stationen sichergestellt. Das Quittungsfenster ist aus diesem Grund mindestens doppelt so groß wie die Zeitdauer für das Erkennen des VETO-Signals. (Jedoch auch mindestens so groß, wie die häufiger vorkommenden Störungen.)

Regel 5

Jede Station führt einen Systemzustandsvektor, in dem der Zustand aller Stationen auf dem letzten Stand gehalten wird. Stationen sind darin *excluded* oder *included* gesetzt.

Regel 6

Empfängt eine Station auf dem einem Kanal korrekte Nachrichten und auf dem anderen Kanal von mehr als der Hälfte der *included* gesetzten Stationen keine korrekten Frames, setzt sie den Kanal *undefined*. Es besteht der Verdacht einer Busunterbrechung oder eines Kurzschlusses. Sie setzt den Kanal *ok,* sobald sie (wieder) mehr als die Hälfte der Stationen auf dem Kanal korrekt empfängt.

Regel 7

Ist einer der Kanäle *undefined* gesetzt, werden alle eigenen Frames mit gesetztem Input-Error-Bit im Protokollbyte gesendet, so daß der Defekt für alle Stationen sichtbar wird. Die Information kann von der Anwendung abgefragt werden.

Regel 8

Der Protokoll-Controller holt eine Anwendernachricht, sobald seine Zeitscheibe erreicht wird, oder er generiert eine Protokollnachricht vom Typ NULL, wenn keine Nachricht vorliegt. Protokollnachrichten enthalten die Nummer des aktuellen Zyklus, die Position der augenblicklichen Zeitscheibe im Zyklus, den aktuellen Systemzustandsvektor und eine geeignete Prüfsumme über die Zyklen.

Regel 9

Sind in einem korrekt empfangenen Frame Anwendernachrichten enthalten, werden sie nach Ablauf des Ouittungsfensters, wenn die Anwendung dies wünscht, übergeben, auch wenn der Transfer durch VETO invalidiert wurde (RECV_VETOMSG). Auch Protokollnachrichten werden, wenn verlangt, übergeben (RECV_PROTMSG).

Regel 10

Werden zwei korrekte Frames empfangen und einer der Kanäle ist *undefinedgesetzt* wird die Nachricht des ok-gesetzten Eingang ausgewertet und, wenn nur eine Nachricht von der Applikation gewünscht wird, letztere weitergeleitet. Dies geschieht, da die Wahrscheinlichkeit eines unerkannten Übertragungsfehlers erhöht ist.

Die folgenden Maßnahmen sind maßgeblich für die Wahrscheinlichkeit der Konsistenz im System.

Regel 11

VETO-Signale (und ihre Hardware) sind so zu implementieren, daß sie mit sehr hoher Wahrscheinlichkeit, auch unter starken Störeinflüssen, erkannt werden. Dabei ist es zulässig, daß die Erkennungs-Hardware einzelne Störungen als VETO interpretiert und meldet, was dann nach Regel 4 global bekannt gemacht wird. Es ist nicht zulässig, daß ein VETO-Signal durch eine mögliche Störung nicht erkannt wird.

Regel 12

VETO wird von der Empfangs-Hardware erkannt, da eine gesonderte Erkennungseinrichtung im Betrieb nicht überprüft werden kann. Außerdem ist damit der Fall, daß eine (einkanalige) Station ein Frame korrekt empfängt, ein nachfolgendes VETO-Signal jedoch nicht erkennt, sehr unwahrscheinlich und kann ausschließlich durch einen transienten Fehler verursacht werden. Ein permanenter Fehler würde beide Funktionen - Empfang von Frames und Veto-Erkennung - stören.

Im Normalbetrieb gelten folgende Protokollregeln:

Regel 13

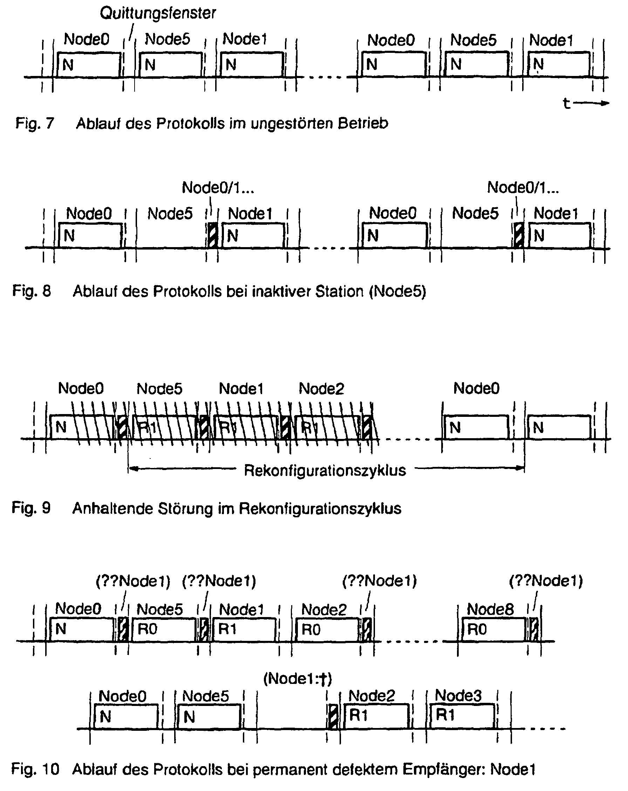

Im Normalbetrieb werden von allen aktiven Stationen Normal-Frames (N) in ihren Zeitfenstern gesendet. (Siehe auch Regel 8.) Normalbetrieb besteht, solange alle aktiven Empfänger in den Zeitfenstern *included* markierter Sender (mindestens) ein Normal-Frame korrekt empfangen. Fig.7 zeigt den Ablauf des Protokolls im ungestörten Betrieb.

Regel 14

Im Quittungsfenster einer *excluded* gesetzten Station wird nach Regel 3 VETO gesendet. In diesem Fall wird von allen Stationen der Normalbetrieb fortgesetzt. Fig.8 zeigt den Ablauf des Protokolls bei inaktiver Station.

Regel 15

Die *included* gesetzten Stationen übermitteln über das Cycle-Bit im Protokoll-Byte kontinuierlich die Nummer des augenblicklichen Zyklus. Die erste Station beginnt mit einer 0 im Cycle-Bit, die Nachfolger senden dann nacheinander so oft eine 1, bis die Nummer des Zyklus erreicht ist. Danach sendet die nächste Station wieder eine 0 usw, siehe auch Regel 26a (Gegenpart). Beim Verlassen des Normalbetrieb oder nach Senden einer Protokollnachricht wird der Mechanismus zurückgesetzt, bis er mit dem ersten ungestörten Normal-Frame (das logischerweise eine 0 im Cycle-Bit enthält) wieder einsetzt.

Regel 16

Eine Station übermittelt in ihrer(n) Zeitscheibe(n) über das Slice-Bit im Normal-Frame die Nummer der augenblicklichen Zeitscheibe (und damit implizit ihre Stationsadresse). Sie beginnt mit einer 0 im Slice-Bit und sendet danach in der gleichen Zeitscheibe so oft eine 1, bis die Nummer der Zeitscheibe erreicht ist. Danach beginnt sie von vorn. Gegenpart: Regel 26b. Beim Verlassen des Normalbetrieb oder nach Senden einer Protokollnachricht wird der Mechanismus zurückgesetzt, bis er mit dem ersten ungestörten Normal-Frame der Station wieder einsetzt.

Wenn die im Zustand *Normalbetrieb* gesendeten Frames eines *included* gesetzten Senders von mindestens einem Empfänger nur gestört oder garnicht empfangen wurden, durchlaufen alle Stationen einen Rekonfigurationszyklus. Für eine solche Störung kommen folgende Ursachen in Betracht:

1. Störeinstreuung,
2. total ausgefallene Station,
3. Station(en) mit defektem(n) Empfangskanal(kanälen),
4. Station mit defektem Sendekanal,
5. Trennung oder Kurzschluß der Busleitung(en), die sich in Form von Station(en) mit Totalausfall und/oder in Form von Station(en) mit defektem Empfangskanal zeigt.

Die Rekonfiguration soll permanente Störursachen beseitigen, soll jedoch im Fall transienter Störungen keine Station fälschlicherweise ausgliedern. In den Fällen 1 bis 4 ist eine eindeutige Ursachenfindung möglich, das heißt die Entscheidung ob und welche Station ausgegliedert werden muß, kann eindeutig und korrekt getroffen werden. Unter den geforderten Realzeitbedingungen kann eine derart korrekte Entscheidung - wenn es eine gibt - im Fall 5 nicht garantiert werden. Es ist jedoch möglich, die Eintrittswahrscheinlichkeit für den Fall 5 durch die Verwendung redundanter Busleitungen und durch Wartung (als Reaktion auf die im Protokoll integrierte Anzeige nach Regel 7) gegen Null zu bringen.

Im Rekonfigurationszyklus werden ausschließlich Recovery-Frames gesendet, die in ihrem Error-Bit einen Teil der Information tragen, die zur Ursachenfindung notwendig ist. Für die Rekonfiguration sind drei Stationsvariablen relevant:

- Über das Error-Bit im Recovery-Frame informiert die Station alle anderen Stationen, ob sie beide Frames des eingangs gestörten Senders inkorrekt oder garnicht empfangen hat.

- In der Variablen *ReceiveOneOK* merkt sich die Station, ob sie im Rekonfigurationszyklus mindestens ein Frame von einer anderen Stationen korrekt empfängt.

- In der Variablen *OtherDisturbed* merkt sich die Station, ob mindestens eine andere Station (ebenfalls) beide Frames des eingangs gestörten Senders inkorrekt empfangen hat.

Die Stationen treffen nach Ende des Rekonfigurationszyklus ihre Entscheidung. An der Entscheidung beteiligt sind die Empfänger, die das Frame des eingangs gestörten Senders, der im Anschluß an den Rekonfigurationszyklus erneut sendet, gestört empfangen haben. Von diesen gliedern sich die Stationen aus, die von keinem Sender ein korrektes Frame empfangen haben oder die als einzige von den wiederholt gestörten Frames des Senders betroffen waren. Alle anderen an der Entscheidung beteiligten Empfänger signalisieren das Aus des eingangs gestörten Senders durch Aussenden des VETO-Signals.

Regel 17

Stellt eine Station im Normalbetrieb fest, daß im Quittungsfenster einer Station VETO gesendet wurde, die im Systemzustandsvektor *included* gesetzt ist, führt sie nachfolgend einen Rekonfigurationszyklus durch. (Im Rekonfigurationszyklus werden grundsätzlich keine Zykluswechsel- und Integrationsnachrichten gesendet.)

a1 Zu Beginn des Rekonfigurationszyklus setzen alle Empfänger, die bei der vorangegangenen Sendung einen Übertragungsfehler festgestellt, ihre Variablen wie folgt

- *Error* = WAHR,
- *ReceiveOneOK* = FALSCH,
- *OtherDisturbed* = FALSCH.

a2 Empfänger, die ein korrektes Normal-Frame empfangen haben, setzen ihre Variablen

- *Error* = FALSCH,
- *ReceiveOneOK* = WAHR,
- *OtherDisturbed* = WAHR.

b1 Alle *included* gesetzten Empfänger senden im Rekonfigurationszyklus in ihrer/en Zeitscheibe/n ein Recovery-Frame mit dem Wert der zuvor gesetzten *Error*-Variablen im Error-Bit im (siehe auch Regel 8 und 9). Der eingangs gestörte Sender sendet, wenn er mehrere Zeitscheiben im Zyklus besitzt, Normal-Frames (N). Stationen, die im Zyklus einen Übertragungsfehler bemerken, senden (wie in Regel 3 vereinbart) VETO, so daß bei der Auslieferung von Nachrichten an die Anwendung die globale Sicht gewährleistet bleibt.
b2 Bei korrektem Empfang eines Frames - egal ob durch VETO invalidiert - setzen die Empfänger ihre Variablen

- *ReceiveOneOK* = WAHR (ein Frame einer anderen Station wurde korrekt empfangen) und, wenn das Error-Bit im Recovery-Frame WAHR gesetzt ist,
- *OtherDisturbed* = WAHR (eine andere Station war eingangs gestört).

c Wird im Rekonfigurationszyklus ein nach Regel 17b1 gesendetes Normal-Frame (N) des eingangs gestörte Senders nicht invalidiert, gilt unmittelbar sofort wieder Normalbetrieb. Dieser Fall ist in Fig.9 dargestellt.
d Am Ende des Zyklus sendet der eingangs gestörte Sender ein Normal-Frame (N).
e Stellt ein Empfänger nach dem Empfang des gemäß Regel 17d gesendeten N-Frames einen Übertragungsfehler fest, wertet er seine Variablen aus:

e1 Ist die Variable *ReceiveOneOK* FALSCH, konnte er kein Frame einer anderen Station korrekt empfangen und gliedert sich still nach Regel 18 aus.
e2 Ist die Variable *ReceiveOneOK* WAHR und die Variable *OtherDisturbed* FALSCH, war er der einzige Teilnehmer, der keine korrekten Nachrichten vom Sender bekommen hat. Er wartet das Quittungsfenster ab. Wird von einer anderen Station VETO ausgelöst, inkrementiert er einen Fehlerzähler. Ist ein zu definierender Wert nicht überschritten bleibt er im aktiven Betrieb. Im anderen Fall und wenn kein VETO ausgelöst wird, gliedert er sich nach Regel 18 aus.
e3 Ist die Variable *ReceiveOneOK* WAHR und die Variable *OtherDisturbed* WAHR, wird die Sendung mit VETO invalidiert, wodurch der Sender nach Regel 19 ausgegliedert wird.

Regel 18

Ausgliederung eines Empfängers: In beiden Fällen, Regel 17e1 oder 17e2, setzt der Empfänger eine Meldung (INTR_EXCLUDED) an die Anwendung ab und geht unmittelbar in den Passivbetrieb. Fig. 10 zeigt den Protokollablauf bei permanent defektem Empfänger.

Regel 19

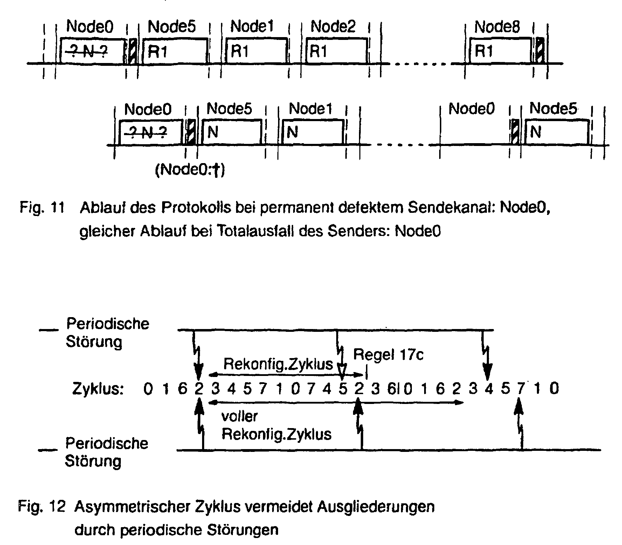

Ausgliederung eines Senders: Im Fall einer Invalidierung nach Regel 17e3 wird der Sender netzweit konsistent ausgegliedert. Alle aktiven Stationen, auch der Sender selbst, markieren den Störenfried im Systemzustandsvektor als *excluded*. Die Ausgliederung des Senders wird der Anwendung bekannt gegeben (INTR_SYSCHANGE). Der Sender geht in den Passivbetrieb (INTR_EXCLUDED). In der nächsten Zeitscheibe wird der Normalbetrieb fortgesetzt. Fig.11 zeigt den Protokollablauf bei permanent defektem Sender.

Bemerkung: Bei einer Störung, die nicht über den Rekonfigurationszyklus hinaus anhält, bleibt der betroffene Sender und alle Empfänger aktiv. Hält eine Störung über den Rekonfigurationszyklus hinaus an, bleibt mindestens eine Station aktiv, entweder der Sender oder bei Teilstörungen mindestens einer der Empfänger.

Bemerkung: Regel 17c ist geeignet bei günstiger Verteilung der Stationen im Zyklus Ausgliederungen durch periodische Störungen zu vermeiden, wenn sie nicht zu schnell sind und jede Zeitscheibe treffen, siehe Fig. 12.

Wenn eine Station zur Initialisierung aufgefordert wird, sind folgende Fälle zu betrachten:

- Es läuft schon ein TDMA-Zyklus:
  die Station wechselt in den Zustand Eingliederung.
- Sie versucht, einen TDMA-Zyklus aufzubauen, indem sie ein erstes INIT-Frame sendet.
  Dabei sind folgende Fälle zu unterscheiden:

  - Eine andere Station versucht auch, einen TDMA-Zyklus aufzubauen.
  - Andere Stationen antworten nicht (Übertragungsfehler, Kollision, keine Station aktiv).
  - Andere Stationen akzeptieren den Versuch.

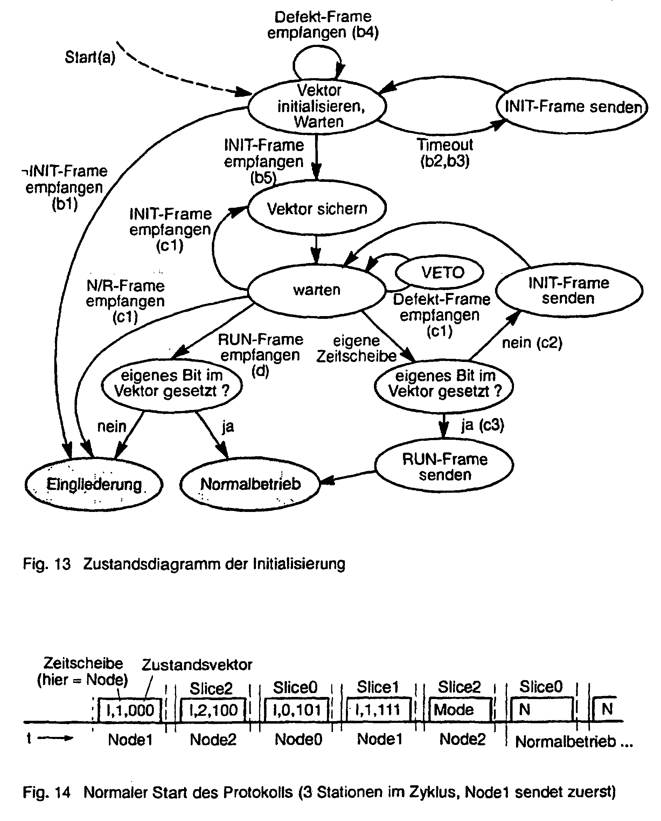

Der Initialisierung liegt das in Fig. 13 gezeigte grobe Zustandsdiagramm zugrunde.

Regel 20

Zu Beginn der Initialisierung wird vom Protokoll-Controller der Zyklus 0 geladen. Darin sollte jede, in den vorgegebenen Zyklen genannte Station mindestens eine Zeitscheibe haben, in der sie sendeberechtigt ist.

a Wird eine Station von der Anwendung zur Initialisierung aufgefordert, wartet sie eine festzulegende Zeitspanne, die den gemeinsamen Start aller Stationen ermöglichen soll, auf ein Frame. Die Zeitspanne sollte so groß gewählt sein, daß die unterschiedlichen Laufzeiten bei der Initialisierung der Stationen ausgeglichen werden. Sie muß größer sein als die Zyklusdauer, um ein laufendes System nicht zu stören.

b1 Bekommt eine wartende Station in der o.g. Zeit ein korrektes Frame, das nicht vom Typ INIT- Protokollnachricht ist, wechselt sie in den Zustand Eingliederung.

b2 Wenn die Station nach Ablauf der o.g. Zeitspanne kein Frame bekommen hat, sendet sie eine eigene initiale INIT-Nachricht. Letztere enthält die Zyklusnummer = 0, die Startzeitscheibe, das ist die erste eigene Zeitscheibe im Zyklus in der ein Senderecht des Senders besteht, den initialen Systemzustandsvektor und eine Prüfsumme über die Zyklusinformation. Im initialen Zustandsvektor sind die Bits aller Stationen *excluded* gesetzt.

b3 Erhält die Station auf ihre INIT-Nachricht innerhalb einer Zeitspanne, die sich aus

$$<Zyklusdauer+2\cdot Startzeitscheibe-Zeitscheibendauer>$$

bestimmt, kein Frame einer anderen Station, sendet sie erneut ihre initiale INIT-Nachricht. Dieser Vorgang wird wiederholt. Die Anzahl der Wiederholungen muß noch festgelegt werden.

b4 Wird zu dieser Zeit ein Frame gestört empfangen, wird kein VETO gesendet und erneut nach Regel b3 verfahren. Dabei wird die o.g. Wartezeit erneut gesetzt.

b5 Nach Erhalt einer fremden korrekten INIT-Nachricht wird die enthaltene Prüfsumme mit der eigenen verglichen. Stimmen sie überein wird die Zeitscheibe mit Hilfe der enthaltenen Zeitscheibennummer synchronisiert, und die Protokolluhren werden gestartet. Die Zeitscheibe wird als Startzeitscheibe gespeichert.

c1 Jedesmal, wenn nachfolgend eine INIT-Nachricht korrekt empfangen wird, wird die enthaltene Prüfsumme und Zeitscheibennummer mit der eigenen verglichen. Im Fall einer Differenz wird das Frame invalidiert, wenn die Station selbst bereits *included* gesetzt ist. Anderenfalls wird der enthaltene Systemzustandsvektor entnommen und lokal überschreibend gespeichert. Gestörte oder invalidierte Frames werden ignoriert. Bei korrektem Empfang von Frames, die nicht vom Typ INIT sind, geht das Protokoll in den Zustand Eingliederung.
c2 Gelangt eine Station in ihre Zeitscheibe, ist jedoch im lokalen (zuletzt gespeicherten) Systemzustandsvektor noch *excluded* gekennzeichnet oder die Startzeitscheibe wurde noch nicht erneut erreicht, kopiert sie den Zustandsvektor in ihre INIT-Protokollnachricht, setzt dort ihr Zustandsbit *included* und sendet das Frame.
c3 Ist eine Station in ihrer Zeitscheibe bereits *included* gesetzt und die Startzeitscheibe wurde erreicht oder überschritten, sendet sie eine Protokollnachricht vom Typ RUN und geht, wenn nicht invalidiert wird, in den Normalbetrieb (festgelegter Zyklus, Zeitscheibe 0). Die Aufnahme des Normalbetriebs wird der Anwendung bekannt gegeben.
d Alle Stationen, die eine Protokollnachricht vom Typ RUN empfangen, die nicht invalidiert wird, schalten ebenfalls in den Normalbetrieb, wenn ihr Bit im Systemzustandsvektor *included* gesetzt ist und eine eigene Nachricht gültig empfangen wurde. Ist das nicht der Fall, gehen sie in den Zustand Eingliederung. Die Aufnahme des Normalbetriebs wird der Anwendung bekannt gegeben.

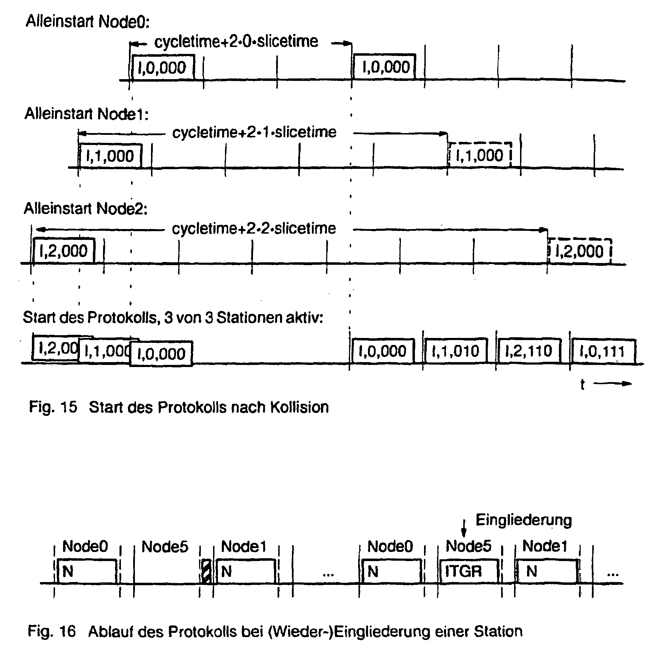

Der Startvorgang ist in Fig. 14 und 15 dargestellt.

Die Anwendung kann den Protokoll-Controller in den Passivbetrieb starten oder umschalten. Der Passivbetrieb wird automatisch aufgenommen, wenn am Ende der Rekonfiguration nach Regel 18 oder Regel 19 eine Ausgliederung erfolgt. Die nachfolgenden Regeln beziehen sich auf den Passivbetrieb:

Regel 21

Im Passivbetrieb werden <u>keine</u> Nachrichten und <u>keine</u> VETO-Signale gesendet. Nachrichten anderer Stationen werden der Anwendung nach Regel 9 übergeben.

Regel 22

Eine Station im Normalbetrieb kann über die Regeln 18, 19 und 33 oder explizit von der Anwendung in den Passivbetrieb geschaltet werden. Der Passivbetrieb wird sofort wirksam. Gelangt eine Station in den Passivbetrieb, setzt sie sich selbst im lokalen Zustandsvektor *excluded.*

Regel 23

Nachrichten, die nur von passiven Stationen inkorrekt empfangen und daher nicht invalidiert werden, gehen verloren. Eine betroffene Station geht in die Synchronisation. Die Anwendung bekommt eine Fehlermeldung.

Regel 24

Die Anwendung kann einen Wechsel vom Passivbetrieb über die Eingliederung in den Normalbetrieb veranlassen, wenn die Station im aktuellen Zyklus eine eigene Zeitscheibe besitzt. Ist dieser Aufforderung eine protokollgesteuerte Ausgliederung nach Regel 18 vorangegangen, führt sie den Zustandswechsel nur dann aus, wenn sie eine bestimmbare Zeitdauer «t» lang keine gestörten Frames empfangen hat und die Anzahl der eigenen Ausgliederungen pro vorangegangener Zeiteinheit «T» einen gegebenen Schwellwert nicht überschritten hat («t» und «T» muß noch festgelegt werden).

Die nachfolgenden Regeln beziehen sich auf die Synchronisation:

Regel 25

Stationen in der Synchronisation senden <u>keine</u> Nachrichten und <u>keine</u> VETO-Signale.

Regel 26

Eine Station muß zunächst, wenn sie nicht protokoll-synchron ist, den aktuellen Zyklus und die Nummer der aktuellen Zeitscheibe in Erfahrung bringen. Die Station muß außerdem den aktuellen Systemzustand bestimmen. Bekommt die Station in Ausführung dieser Regel eine Protokollnachricht gilt unmittelbar Regel 27.

a Nummer des aktuellen Zyklus (Mode) bestimmen: Dazu wertet die Station nacheinander die Cycle-Bits aller Normal-Frames aus, die nicht invalidiert werden. Bekommt sie ein gestörtes Frame, das nicht invalidiert wird, oder ein Recovery-Frame, muß sie die Auswertung neu beginnen. Eine Sequenz beginnt mit einer ersten 0 (Anfangskennung) im Cycle-Bit und ist vollständig, wenn eine zweite 0(Endekennung) erkannt wird. Die Nummer des Zyklus ergibt sich aus der Summe unmittelbar aufeinander folgender Normal-Frames mit einer 1 im Cycle-Bit.
b Zeitscheiben bestimmen: Setzt man die eigene statische Zyklusinformation zunächst als konsistent mit dem System voraus, kann die beobachtende Station einzelne Zeitscheiben im aktuellen Zyklus inspizieren und die Slice-Bits der darin gesendeten Normal-Frames mit Applikationsnachricht auswerten. Eine Sequenz ist gültig, wenn die beobachtete Zeitscheibe nicht gestört wird, also Normal-Frames in Folge gesendet werden. Die erste abgeschlossene 0(Anfangskennung) bis 0(Endekennung)-Sequenz läßt die Nummer der Zeitscheibe erkennen, die sich aus der Summe unmittelbar aufeinander folgender Normal-Frames der Zeitscheibe mit einer 1 im Slice-Bit ergibt. Mit Hilfe der Zeitscheibennummer kann wegen der global konsistenten Zyklusinformation auf die Stationsadresse geschlossen werden. Damit ist/sind auch die eigene/n Zeitscheibe/n im Zyklus bestimmt. Wurde in (einer) dieser Zeitscheibe/n ein Frame empfangen ist die Information inkonsistent. Die Station geht erneut in die Synchronisation oder schaltet bei Erreichen einer noch festzulegenden Anzahl von Versuchen ab.

c Systemzustand bestimmen: Die Station setzt alle Stationen im eigenen Systemzustandsvektor *excluded* und beobachtet einen ungestörten TDMA-Zyklus lang das Nachrichtengeschehen (nur N-Frames werden gesendet). Sie setzt dabei alle Stationen *included,* deren Zeitscheibe nicht durch VETO invalidiert wird. Regel 26c kann parallel zu Regel 26b durchgeführt werden.

Regel 27

Wird in der Synchronisationsphase ein Frame mit Protokoll-Nachricht (NULL, CHANGE-CYCLE) korrekt empfangen und nicht invalidiert, wird die enthaltene Prüfsumme mit der eigenen Prüfsumme verglichen. Bei einer Differenz (Abweichung der Zyklusinformation im System mit den eigenen Zyklusinformation) schaltet sich die Station ab. Im Anderen Fall wird der aktuelle Zyklus, die aktuelle Zeitscheibe, der Zustandsvektor und die neue Zyklusnummer übernommen. Die Synchronisation ist damit abgeschlossen.

Die nachfolgenden Regeln sind maßgeblich für die Eingliederung einer Station.
Fig. 16 zeigt eine Eingliederung.

Regel 28.

Stationen im Zustand Eingliederung senden grundsätzlich <u>keine</u> VETO-Signale.

Regel 29

a Wenn eine Station nicht direkt aus dem Passivbetrieb kommt, muß sie zunächst nach Regel 26 oder 27 den aktuellen Zyklus, ihre Zeitscheibe und den aktuellen Systemzustandsvekor bestimmen. Nachrichten werden nach Regel 9 an die Anwendung weitergeleitet, sobald die aktuelle Zeitscheibe und der Zyklus bekannt sind. Besitzt die Station im Zyklus keine eigene Zeitscheibe, geht sie unmittelbar in den Passivbetrieb.

b Wurde (oder wird im Zustand Eingliederung) eine Station durch Regel 27 protokoll-synchron sendet sie in ihrer ersten nachfolgenden Zeitscheibe eine Applikations- bzw. NULL-Nachricht nach Regel 8. Anderenfalls sendet sie, sobald das laufende Protokoll im Normalbetrieb arbeitet, ein N-Frame mit Protokollnachricht vom Typ INTEGRATE.

c1 Wird die Nachricht nicht invalidiert, ist die Station integriert und befindet sich unmittelbar im Normalbetrieb. Sie wird von <u>allen</u> Stationen *included* gesetzt, und die Anwendung bekommt eine Mitteilung (INTR_SYSCHANGE).

c2 Im anderen Fall geht die Station in den Passivbetrieb und nimmt Regel 26 auf.

Regel 30

Wird von einer *included* gesetzten Station im Normalbetrieb von einer anderen Station ein Normal-Frame mit Protokollnachricht vom Typ INTEGRATE empfangen, wird der enthaltene Zyklus, die Zeitscheibe, der Systemzustandsvektor und die Prüfsumme der Zyklusinformation mit den eigenen Werten verglichen. Im Fall einer Differenz, wird die Nachricht durch VETO-Signal invalidiert.

Regel 31

Empfängt eine Station in der Eingliederung einen TDMA-Zyklus lang kein Frame; geht sie in die Initialisierung.

Im folgenden sind die Regeln für Zykluswechsel (Mode-Changes) angegeben.

Regel 32

Gelangt eine *included* gesetzte Station <u>im Normalbetrieb</u> in ihre Zeitscheibe sendet sie eine Protokollnachricht vom Typ CHANGECYCLE, wenn ihr ein entsprechender Wunsch von der Applikation vorliegt. Die Nachricht enthält (außer den aktuellen Protokollinformationen) die Nummer des angeforderten Zyklus.

Regel 33

Empfängt eine Station im Normalbetrieb eine Protokollnachricht vom Typ CHANGE-CYCLE überprüft sie, ob der angeforderte Zyklus zuvor von der eigenen Applikation freigegeben wurde (explizit oder ANY_CYCLE).

a Ist das nicht der Fall, sendet sie VETO. Eine mit VETO bedachte CHANGECYCLE-Nachricht wird generell verworfen. Danach wird wie üblich (nach Regel 17) ein Rekonfigurationszyklus durchgeführt, so daß ein erneuter Zykluswechsel zunächst verhindert wird.

b Wird die CHANG ECYCLE-Nachricht nicht mit VETO quittiert, speichern alle Stationen die neue Zyklusnummer und senden bis zum Ende des aktuellen Zyklus alle Frames mit gesetztem GroupStation-Bit (Cycle/Slice-Bit nicht auswerten). Der neue Zyklus kann noch bis zum Zyklusende durch eine erneute CHANGE-CYCLE-Nachricht übersteuert werden. Eine Widerspruchsmöglichkeit aller Stationen ist gegeben, wenn die Anforderung in der Zeitscheibe 0 versendet wird.

c Nach Abschluß des laufenden Zyklus wird der neue Zyklus eingestellt. Stationen, die im neuen Zyklus kein Senderecht besitzen, werden *excluded* gesetzt und gehen in den Passivbetrieb. Stationen, die im Vorzyklus kein Senderecht hatten und nun beteiligt sind, versetzen sich in den Zustand Eingliederung, wenn sie nicht permanent (mehrfach nach Regel 19) ausgegliedert wurden.

Die folgenden Maßnahmen sind geeignet das Restrisiko aus Regel 12 abzudecken. Sie sind sehr einfach zu implementieren und bewirken, daß die Konsistenz im System innerhalb eines Zyklus wiederhergestellt ist:

Regel 34

Empfängt eine Station, nach einer korrekten, nicht-invalidierten Übertragung eines Normal-Frame, ein Recovery-Frame, verbleibt sie im Normalbetrieb.

Regel 35

Empfängt eine Station, die sich im Rekonfigurationszyklus befindet, ein Normal-Frame von einer Station, die nicht der eingangs gestörte Sender ist, wertet sie das Frame wie ein Recovery-Frame mit gelöschtem Error-Bit. Handelt es sich beim Normal-Frame um eine Protokollnachricht vom Typ CHANGECYCLE, wird die Zeitscheibe durch VETO invalidiert.

**Literatur**

[1] SAE Handbook Volume 2, Parts and Components:
Class C Application Requirement / Survey of known Protocols, S 23.366 ff, 1994

[2] ISO 11898: Road vehicles - Interchange of digital information -
Controller area network (CAN) for high-speed communication, 1993

[3] Telefunken Electronics:
Automotive Bit-serial Universal-interface System (ABUS), 8/1988

[4] IEC TC9 WG 22:
Train Communication Network (1. General Architecture, 2. Real-Time Protocols, 3. Multifunction Vehicle Bus, 4. Wire Train Bus), Working Document 3/1994

[5] H. Kopetz, W. Ochsenreiter:
Clock Synchronization in Distributed Real-Time Systems,
IEEE Transactions on Computers, Vol.C-36, No.8, 8/1987

[6] H. Kopetz, W. Ochsenreiter:
Clock Synchronization UNIT (CSU) Datasheet,
Research Report 22/89, Technische Universität Wien, November 1989

[7] K. Hoyme, K. Driscoll:
SAFEbus™, Honeywell Systems and Research Center,
(Draft in ARINC 659, Boing 777), IEEE AES Systems Magazine, 3/1993

[8] H. Kopetz, G. Grünsteidl:
TTP- A Time Triggered Protocol for Automotive Applications,
Technische Universität Wien, 10/1992 bzw.
The 23rd International Symposium on Fault-Tolerant Computing, Toulouse 6/1993

[9] ISO/IEC 8802-4, ANSI/IEEE Std 802.4:
Token-Passing Bus Access Method and Physical Layer Specifications,1990

[10] IEEE Std 802.5:
Token Ring Access Method and Physical Layer Specifications,1989

[11] ISO/IEC 8802-3, ANSI/IEEE Std 802.3:
Carrier Sense Multiple Access with Collision Detection (CSMA/CD)
Access Method and Physical Layer Specifications,1990

[12] MIL-STD-1553B:
Aircraft Internal Time Division Command/Response Multiplex Data Bus, 9/1978

[13] ARINC 629-2 Multi-Transmitter Data Bus, Technical Description,
Aeronautical Radio INC, 10/1991

[14] Hopkins et al. : United States Patent 4,161,786,
Digital Bus Communication System

**Patentansprüche**

1. Protokoll zur Übertragung von Nachrichten zwischen sendenden und empfangenden Stationen für sicherheitskritische Anwendungen auf der Basis einer durchgängig deterministischen Zeitscheibenvergabe, wobei die Zeitscheiben zyklisch jeweils einer Station zuzuordnen sind und global konsistent allen Stationen im System vorzugeben sind
   **dadurch gekennzeichnet,**
   **daß** die Zeitscheiben jeweils in ein zeitliches Transferfenster zur Übertragung der Nachricht und in ein an das Transferfenster anschließendes Quittungsfenster unterteilt werden und daß im Quittungsfenster ausschließlich bei einem Übertragungsfehler, das heißt nach einer fehlerhaft oder gar nicht empfangenen Nachricht, von den betroffenen Empfangsstationen ein VETO-Signal gesendet wird,
   **daß** VETO-Signale außer ihrer Anwesenheit keinen weiteren Informationsinhalt besitzen und als dominante Signale implementiert sind, weshalb sie auch in Anwesenheit von Störsignalen mit hoher Wahrscheinlichkeit global konsistent erkannt werden, und
   **daß** eine Station, die irrtümlich ein VETO-Signal erkennt bis zum Ende des Quittungsfensters VETO sendet, so daß ein lokal als VETO fehlinterpretiertes Störsignal ebenfalls mit hoher Wahrscheinlichkeit in ein global konsistentes VETO-Signal umgewandelt wird.

2. Protokoll nach Anspruch 1,
   **dadurch gekennzeichnet,**
   **daß** nach Erkennen eines VETO-Signals im Quittungsfenster einer zuvor aktiven Sendestation (s) alle Stationen einen Rekonfigurationszyklus durchlaufen, der der Ermittlung der exakten Ursache des Übertragungsfehlers dient, so daß im Anschluß, wenn ein permanenter Fehler vorliegt, die betroffene Station aus dem Kommunikationssystem ausgegliedert wird bzw. sich selbst ausgliedert.

3. Protokoll nach Anspruch 2,
   **dadurch gekennzeichnet,**
   **daß** zu Beginn des Rekonfigurationszyklus alle Empfänger, die in der vorangegangenen Zeitscheibe selbst keine oder keine korrekte Sendung empfangen haben, ihre Variablen

   - *Error* = WAHR,
   - *ReceiveOneOK* = FALSCH,
   - *OtherDisturbed* = FALSCH

setzen und

**daß** Empfänger, die eine korrekte Sendung empfangen haben, ihre Variablen

- *Error* = FALSCH,
- *ReceiveOneOK* = WAHR,
- *OtherDisturbed* = WAHR

setzen,

**daß** alle aktiven Empfänger im Rekonfigurationszyklus in ihrer/en Zeitscheibe/n ihre Nachrichten mit gesetztem Rekonfigurationsbit (r) und mit dem zuvor in der Variablen *Error* gespeicherten Wert im Fehlerbit (f) senden,

**daß** bei korrektem Empfang einer solchen Nachricht (r) die Empfänger ihre Variablen

- *ReceiveOneOK* = WAHR setzen, d.h. die Sendung einer anderen Station wurde korrekt empfangen,

und, wenn das Fehlerbit (f) in der Nachricht (r) WAHR ist,

- *OtherDisturbed* = WAHR setzen, d.h. eine andere Station war eingangs gestört,
  **daß**, wenn der eingangs gestörte Sender (s) im Zyklus eine weitere Zeitscheibe besitzt, die nicht durch VETO gekennzeichnet wird, alle Stationen vorzeitig in den Normalbetrieb zurückkehren,

**daß** am Ende des Rekonfigurationszyklus, wenn wiederum das Sendefenster des eingangs gestörten Sender (s) abgelaufen ist und ein Empfänger (e) erneut einen Übertragungsfehler feststellt, letzterer seine Variablen auswertet,

**daß**, wenn die Variable *ReceiveOneOK* FALSCH ist, er (e) also keine Sendung einer anderen Station korrekt empfangen konnte, er sich selbst ausgliedert und alle Sendungen einstellt,

**daß**, wenn die Variable *ReceiveOneOK* WAHR ist und die Variable *OtherDisturbed* FALSCH ist, er (e) also der einzige Teilnehmer war, der keine korrekte Sendung vom Sender bekommen hat, er das Quittungsfenster abwartet und, wenn von keiner anderen Station VETO gesendet wird, er sich selbst ausgliedert und alle Sendungen einstellt,

**daß**, wenn die Variable *ReceiveOneOK* WAHR ist und die Variable *OtherDisturbed* WAHR ist, er (e) die Zeitscheibe durch Senden des VETO-Signals als gestört kennzeichnet, wodurch alle Teilnehmer den gestörten Sender (s) ausgliedern und weitere Übertragungsfehler in seinen Zeitscheiben ignorieren.

4. Protokoll nach Anspruch 3,
   **dadurch gekennzeichnet,**
   **daß** Burst-Störungen, deren Dauer einen Kommunikationszyklus nicht übersteigen, keine fälschliche Ausgliederung einer Station bewirken und
   **daß**, wenn zwei Teilzyklen zu einem Kommunikationszyklus zusammengefaßt werden, wobei in den Teilzyklen jeweils alle Stationen, die sicherheitskritische Aufgaben wahrnehmen, ein Senderecht besitzen, das jedoch in unterschiedlichen Zeitscheiben der Teilzyklen besteht, auch periodische Störungen, deren einzelne Dauern kleiner als das Quittungsfenster sind, keine fälschliche Ausgliederung einer Station bewirken.

**Claims**

1. A protocol for transmitting messages between sending and receiving stations for safety-critical applications on the basis of the generally deterministic allocation of time slices, the time slices each being allocated cyclically to a station and pre-set globally consistent with all the stations in the system,
   **characterised in that**
   the time slices are each divided into a temporary transfer window for transmitting the message and an acknowledgement window which follows the transfer window, i.e. after the incorrect reception or non-reception of a message the receiving station in question sends a VETO signal,
   VETO signals have no information content other than their simple presence and are implemented as dominant signals, as a result of which they can be recognised in a globally consistent manner with high probability even in the presence of disturbing signals,
   a station which erroneously recognises a VETO signal sends VETOs until the end of the acknowledgement window and any disturbing signal locally misinterpreted as a VETO signal can therefore also be converted into a globally consistent VETO signal with high probability.

**2.** A protocol in accordance with claim 1,
**characterised in that**
after recognising a VETO signal in the acknowledgement window of a previously active sending station (s), all stations run through a reconfiguration cycle which serves to determine the exact cause of the transmission error and that subsequently, in the case of a permanent error, the station in question is therefore excluded or excludes itself from of the communication system.

**3.** A protocol in accordance with claim 2,
**characterised in that**
at the start of the reconfiguration cycle all receivers which themselves received no or no correct transmission in the preceding time slice set their variables to

- *error* = TRUE,
- *ReceiveOneOK* = FALSE,
- *OtherDisturbed* = FALSE

and
receivers which received a correct transmission set their variables to

- *error* = FALSE,
- *ReceiveOneOK* = TRUE,
- *OtherDisturbed* = TRUE,

all active receivers in the reconfiguration cycle send their messages in their time slice/s with a set reconfiguration bit (r) and with the value previously stored in the variable *error* in the error bit (f),
on correct reception of such a message (r) the receivers set their variables to

- *ReceiveOneOK* = TRUE, i.e. a transmission from another station was correctly received,

and, if the error bit (f) in the message (r) is TRUE, set

- *OtherDisturbed* = TRUE, i.e. another station was disturbed at the outset, if the sender (s) disturbed at the outset has another time slice in the cycle which is not **characterised by** VETOs all stations soon return to normal operation,

at the end of the reconfiguration cycle if the send window of the sender (s) disturbed at the outset has once again expired and a receiver (e) once again determines a transmission error, the latter evaluates its variables,
if the variable *ReceiveOneOK* is FALSE and it (e) was not therefore able to correctly receive a transmission from another station it excludes itself and ceases all transmissions,
if the variable *ReceiveOneOK* is TRUE and the variable *OtherDisturbed* is FALSE and it (e) was therefore the only participant which failed to receive a correct transmission from the sender, it waits for the acknowledgement window and, if VETOs are not transmitted by any other station, it excludes itself and ceases all transmission,
if the variable *ReceiveOneOK* is TRUE and the variable *OtherDisturbed* is TRUE, it (e) recognises the time slice as disturbed by sending the VETO signal whereby all participants exclude the disturbed sender (s) and ignore further transmission errors in its time slices.

**4.** A protocol in accordance with claim 3,
**characterised in that**
burst disturbances whose duration does not exceed a communication cycle do not cause any erroneous exclusion of the station and
if two part cycles are combined to form one communication cycle, in the part cycles all stations carrying out safety critical tasks having a transmission right which, however, exists in different time slices of the part cycles, periodic disturbances whose individual durations are shorter than the acknowledgement window do not cause the erroneous exclusion of a station.

**EP 0 897 626 B1**

**Revendications**

1. Protocole pour la transmission d'informations entre des stations d'envoi et de réception destinées à des applications critiques pour la sécurité, basé sur une attribution déterministe d'intervalles de temps, les intervalles de temps devant être associés de façon cyclique respectivement à une station et devant être prédéterminés de façon universelle pour toutes les stations du système,

   **caractérisé en ce que**

   les intervalles de temps sont divisés respectivement en une fenêtre de transfert temporelle destinée à la transmission des informations et en une fenêtre d'accusé de réception liée à la fenêtre de transfert, et **en ce que** dans la fenêtre d'accusé de réception, un signal de VETO est envoyé par les stations de réception concernées uniquement lors d'une erreur de transmission, c'est-à-dire lorsqu'une information a été reçue de façon incorrecte ou n'a pas été reçue,

   **en ce que** les signaux de VETO ne possèdent outre leur présence aucun contenu d'information supplémentaire et sont implémentés en tant que signaux dominants, c'est pourquoi ils peuvent être reconnus de façon universelle avec une forte probabilité même en présence de signaux perturbateurs, et

   **en ce qu'**une station qui reconnaît par erreur un signal de VETO envoie un VETO jusqu'à la fin de la fenêtre d'accusé de réception, de telle sorte qu'un signal perturbateur interprété localement de façon erronée en tant que VETO est également transformé avec une forte probabilité en un signal de VETO universel.

2. Protocole selon la revendication 1, **caractérisé en ce qu'**après la reconnaissance d'un signal de VETO dans la fenêtre d'accusé de réception d'une station d'envoi (s) préalablement activée, toutes les stations effectuent un cycle de reconfiguration, qui permet d'identifier la cause exacte de l'erreur de transmission, de telle sorte que par la suite, lorsque l'on est en présence d'une erreur permanente, la station concernée est détachée du système de communication ou s'en détache elle-même.

3. Protocole selon la revendication 2,

   **caractérisé en ce qu'**

   au début du cycle de reconfiguration, tous les récepteurs qui, dans l'intervalle de temps précédent, n'ont eux-mêmes reçu aucun envoi ou aucun envoi correct, définissent leurs variables à

   - *Error* = VRAI
   - *ReceiveOneOK* = FAUX
   - *OtherDisturbed* = FAUX

   et

   **en ce que** les récepteurs qui ont reçu un envoi correct définissent leurs variables à

   - *Error* = FAUX
   - *ReceiveOneOK* = VRAI
   - *OtherDisturbed* = VRAI

   **en ce que** tous les récepteurs actifs dans le cycle de reconfiguration envoient dans leur(s) intervalle(s) de temps leurs informations avec un bit de reconfiguration défini (r) et avec la valeur préalablement stockée dans la variable Error, dans le bit d'erreur (f),

   **en ce que** lors d'une réception correcte d'une telle information (r), les récepteurs définissent leurs variables à

   - *ReceiveOneOK* = VRAI, c'est-à-dire que l'envoi à une autre station a été correctement reçu,

   et, lorsque le bit d'erreur (f) dans l'information (r) est défini à VRAI, définissent

   - *OtherDisturbed* = VRAI, c'est-à-dire qu'une autre station a été perturbée au début

   **en ce que** lorsque l'émetteur (s) perturbé au début possède dans le cycle un autre intervalle de temps qui n'est pas désigné par VETO, toutes les stations reviennent prématurément en fonctionnement normal,

   **en ce qu'**à la fin du cycle de reconfiguration, lorsque la fenêtre d'envoi de l'émetteur (s) perturbé au début est à nouveau arrivée à échéance et qu'un récepteur (e) détermine à nouveau une erreur de transmission, la dernière de ses variables est exploitée,

   **en ce que** lorsque la variable *ReceiveOneOK* est définie à FAUX, c'est-à-dire que le récepteur (e) n'a ainsi pu recevoir correctement aucun envoi d'une autre station, celui-ci se détache lui-même et stoppe tous les envois,

**en ce que** lorsque la variable *ReceiveOneOK* est définie à VRAI et que la variable *OtherDisturbed* est définie à FAUX, c'est-à-dire que le récepteur (e) était le seul participant à n'avoir reçu aucun envoi correct de la part de l'émetteur, il attend la fenêtre d'accusé de réception et, si un VETO n'a été envoyé par aucune autre station, il se détache lui-même et stoppe tous les envois,

**en ce que** lorsque la variable *ReceiveOneOK* est définie à VRAI et que la variable *OtherDisturbed* est définie à VRAI, le récepteur (e) désigne, par l'envoi du signal de VETO, l'intervalle de temps comme perturbé, tous les participant se détachant ainsi de l'émetteur perturbé (s) et ignorant d'autres erreurs da transmission dans ses intervalles de temps.

4. Protocole selon la revendication 3,

**caractérisé en ce que**

de brèves perturbations, dont la durée ne dépasse pas un cycle de communication, ne provoquent aucun détachament erroné d'une station et

**en ce que** lorsque deux cycles partiels sont regroupes en un cycle de communication, c'est-à-dire que toutes les stations qui assurent des tâches critiques pour la sécurité possèdent alors respectivement dans chaque cycle partiel un droit d'envoi qui se compose toutefois de différents intervalles de temps des cycles partiels, même les perturbations périodiques, dont les durées individuelles sont inférieures à la fenêtre d'accusé de réception, ne provoquent aucun détachement erroné d'une station.

TDMA-Zyklus

| Node0 | Node1 | Node2 | Node3 | Node4 | Node0 |

→ t

Zeitscheibe

Quittungs-fenster

Transferfenster

Frame

Frame-Übertragungsdauer

$T_{Tick}$ = maximale Uhren-abweichung im System

$t_{Send}$ = eigener Sendezeitpunkt

! Uhrenabweichung und Quittungsfenster sind stark vergrößert dargestellt

Fig. 1   Ungestörter Betrieb

VETO    Nachrichten zur Anwendung ...

| Node0 | Node1 | Node2 | Node3 | Node4 | Node0 |

Rekonfigurationszyklus

Fig. 2   Einzelstörung (Sendefehler oder Störung)

Nachrichten zur Anwendung

| Node0 | Node1 | Node2 | Node3 | Node4 | Node0 |

Fig. 3   Anhaltende Störung (Burst-Störung)

Nachrichten zur Anwendung ...

| Node0 ? | Node1 | Node2 | Node3 | Node4 | Node0 † |

Fig. 4   Ausfall einer Station (oder permanenter Sendefehler)

Application System

Fig. 5   Anschlüsse des Protokoll-Controllers

Fig. 6   Zustandsdiagramm des Protokoll-Controllers

22

Fig. 7 Ablauf des Protokolls im ungestörten Betrieb

Fig. 8 Ablauf des Protokolls bei inaktiver Station (Node5)

Fig. 9 Anhaltende Störung im Rekonfigurationszyklus

Fig. 10 Ablauf des Protokolls bei permanent defektem Empfänger: Node1

| Node0 | | Node5 | | Node1 | | Node2 | | | | Node8 | |
|---|---|---|---|---|---|---|---|---|---|---|---|
| -?-N-? | | R1 | | R1 | | R1 | | | | R1 | |

| Node0 | | Node5 | | Node1 | | | | | Node0 | | Node5 | |
|---|---|---|---|---|---|---|---|---|---|---|---|---|
| -?-N-? | | N | | N | | | | | | | N | |

(Node0:†)

Fig. 11 Ablauf des Protokolls bei permanent defektem Sendekanal: Node0,
gleicher Ablauf bei Totalausfall des Senders: Node0

— Periodische
Störung

Rekonfig.Zyklus    Regel 17c

Zyklus:  0  1  6  2  3  4  5  7  1  0  7  4  5  2  3  6  0  1  6  2  3  4  5  7  1  0

voller
Rekonfig.Zyklus

— Periodische
Störung

Fig. 12 Asymmetrischer Zyklus vermeidet Ausgliederungen
durch periodische Störungen

Defekt-Frame
empfangen (b4)

Start(a)

Vektor
initialisieren,
Warten

INIT-Frame senden

Timeout
(b2,b3)

INIT-Frame
empfangen
(b5)

¬INIT-Frame
empfangen
(b1)

INIT-Frame
empfangen
(c1)

Vektor sichern

VETO

INIT-Frame
senden

N/R-Frame
empfangen
(c1)

warten

Defekt-Frame
empfangen
(c1)

nein (c2)

RUN-Frame
empfangen
(d)

eigene
Zeitscheibe

eigenes Bit im
Vektor gesetzt ?

eigenes Bit im
Vektor gesetzt ?

nein        ja

ja (c3)

Eingliederung      Normalbetrieb

RUN-Frame
senden

Fig. 13  Zustandsdiagramm der Initialisierung

Zeitscheibe   Zustandsvektor
(hier = Node)

| Slice2 | Slice0 | Slice1 | Slice2 | Slice0 |
|--------|--------|--------|--------|--------|
| I,1,000 | I,2,100 | I,0,101 | I,1,111 | Mode | N | N |

t ⟶   Node1   Node2   Node0   Node1   Node2   Normalbetrieb ...

Fig. 14  Normaler Start des Protokolls (3 Stationen im Zyklus, Node1 sendet zuerst)

Alleinstart Node0:

Alleinstart Node1:

Alleinstart Node2:

Start des Protokolls, 3 von 3 Stationen aktiv:

Fig. 15  Start des Protokolls nach Kollision

Fig. 16  Ablauf des Protokolls bei (Wieder-)Eingliederung einer Station